(19)

Europäisches
Patentamt

European
Patent Office

Office européen
des brevets

(11) **EP 4 708 822 A1**

(12) **EUROPEAN PATENT APPLICATION**
published in accordance with Art. 153(4) EPC

(43) Date of publication:
**11.03.2026   Bulletin 2026/11**

(21) Application number: **24918033.2**

(22) Date of filing: **19.08.2024**

(51) International Patent Classification (IPC):
***H04L 67/1095*** *(2022.01)*

(52) Cooperative Patent Classification (CPC):
**H04J 3/06; H04L 67/1095; H04N 21/43**

(86) International application number:
**PCT/CN2024/113137**

(87) International publication number:
**WO 2025/152422 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **18.01.2024   CN 202410078224**

(71) Applicant: **Actions Technology Co., Ltd.
Zhuhai, Guangdong 519085 (CN)**

(72) Inventors:
• **MA, Shujun
  Zhuhai, Guangdong 519085 (CN)**
• **WU, Rui
  Zhuhai, Guangdong 519085 (CN)**

(74) Representative: **Metida
Gyneju str. 16
01109 Vilnius (LT)**

(54) **LINK SYNCHRONIZATION METHOD AND APPARATUS, ELECTRONIC DEVICE, AND STORAGE MEDIUM**

(57)    A link synchronization method, a link synchronization device, an electronic device, and a computer-readable storage medium are provided. The link synchronization method includes establishing an information synchronization link between first and second master devices in response to connection events, acquiring a synchronization connection event anchor point and a synchronization connection event interval of the information synchronization link; and performing link timing synchronization on first audio links corresponding to the first master device and the second audio links corresponding to the second master device according to the synchronization connection event anchor point and the synchronization connection event interval. The first audio links are audio links between the first master device and the first target slave devices, and the second audio links are audio links between the second master device and the second target slave devices. In this way, the audio link timing is synchronized and RF interference is avoided.

```
┌────────────────────────────────────────────────┐
│ Establishing an information synchronization link │
│ between the first master device and the second   │
│ master device in response to device connection   │ S10
│ events, and acquiring a synchronization           │
│ connection event anchor point and a               │
│ synchronization connection event interval of the  │
│ information synchronization link                  │
└────────────────────────────────────────────────┘
                        │
                        ▼
┌────────────────────────────────────────────────┐
│ Performing link timing synchronization on first   │
│ audio links corresponding to the first master     │ S20
│ device and second audio links corresponding to    │
│ the second master device according to the         │
│ synchronization connection event anchor point and │
│ the synchronization connection event interval     │
└────────────────────────────────────────────────┘
```

FIG. 5

EP 4 708 822 A1

**Description**

**TECHNICAL FIELD**

The present disclosure relates to a technical field of BLUETOOTH transmission, and in particular to a link synchronization method, a link synchronization device, an electronic device, and a computer-readable storage medium.

**BACKGROUND**

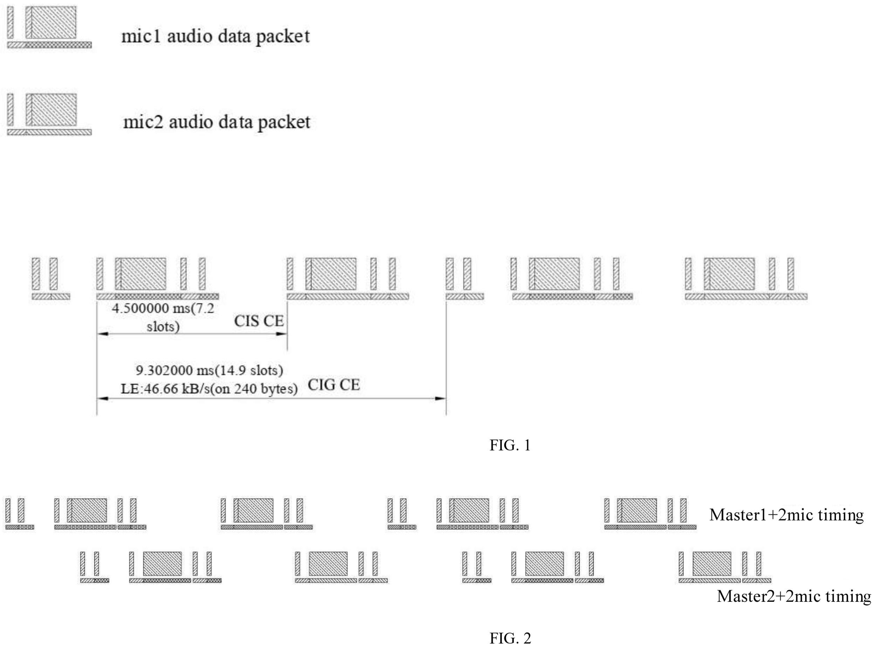

For a wireless microphone (mic) with four transmitters and two receivers (four transmitting ends and two receiving ends), to ensure sufficient bandwidth when receiving four channels of audio data, two master devices must be integrated on the two receivers each connected. Each master device is connected to two mic slave devices. Over-the-air data packet timing for a low energy (LE) audio corporate identity system (CIS) link is shown in FIG. 1.

The over-the-air timing is solely dependent on a BLUETOOTH clock of the two master devices. Because there is no synchronization mechanism between the two master devices, transmission and reception processes of the first master device may overlap with transmission and reception processes of the second master device. Furthermore, because the two master devices are integrated into the wireless microphone and are relatively close to each other, transmit channels for data transmission may radiate power to adjacent channels, leading to radio frequency (RF) interference when transmitting and receiving data.

**SUMMARY**

Embodiments of the present disclosure provide a link synchronization method, a link synchronization device, an electronic device, and a computer-readable storage medium to synchronize audio link timing, thereby avoiding inter-channel RF interference.

In a first aspect, the present disclosure provides a link synchronization method applied to an audio transmission system. The audio transmission system includes a first master device, a second master device, first target slave devices matching the first master device, and second target slave devices matching the second master device. The link synchronization method comprising steps:

establishing an information synchronization link between the first master device and the second master device in response to device connection events, and acquiring a synchronization connection event anchor point and a synchronization connection event interval of the information synchronization link; and performing link timing synchronization on first audio links corresponding to the first master device and second audio links corresponding to the second master device according to the synchronization connection event anchor point and the synchronization connection event interval.

The first audio links are audio links between the first master device and the first target slave devices, and the second audio links are audio links between the second master device and the second target slave devices.

In a second aspect, the present disclosure provides a link synchronization device. The link synchronization device includes an establishment module and a synchronization module. The establishment module is configured to establish an information synchronization link between a first master device and a second master device in response to device connection events, and acquire a synchronization connection event anchor point and a synchronization connection event interval of the information synchronization link. The synchronization module is configured to perform link timing synchronization on first audio links corresponding to the first master device and second audio links corresponding to the second master device according to the synchronization connection event anchor point and the synchronization connection event interval. The first audio links are audio links between the first master device and first target slave devices, and the second audio links are audio links between the second master device and second target slave devices.

In a third aspect, the present disclosure provides an electronic device. The electronic device includes a processor and a memory. The memory stores a computer program. When the computer program is executed by the processor, the processor executes the steps of the link synchronization method described above.

In a fourth aspect, the present disclosure provides a computer-readable storage medium. The computer-readable storage medium includes a computer program. When the computer program is run on an electronic device, the computer program enables the electronic device to execute the steps of the link synchronization method described above.

Compared with an audio transmission method through four transmitters and two receivers in the prior art, in the present disclosure, the information synchronization link between the first master device and the second master device is established first. The information synchronization link is configured to synchronize timing of the two master devices. Then, the synchronization connection event anchor point and the synchronization connection event interval of the information synchronization link are acquired. Link timing synchronization is performed on the first audio links corresponding to the first master device and the second audio links corresponding to the second master device according to the synchronization connection event anchor point and the synchronization connection event interval. A timing synchronization mechanism between the two master devices avoids overlapping of audio data transmission and reception processes of the two master devices, eliminates interference between adjacent channels during the audio data transmission and reception process, and thus ensures accuracy of audio data transmission.

## BRIEF DESCRIPTION OF DRAWINGS

In order to clearly describe technical solutions in the embodiments of the present disclosure, the following will briefly introduce the drawings that need to be used in the description of the embodiments or the prior art. Apparently, the drawings in the following description are merely some of the embodiments of the present disclosure, and those skilled in the art are able to acquire other drawings according to the drawings without contributing any inventive labor.

FIG. 1 is a schematic diagram of a two-transmitter and one-receiver link according to one embodiment of the present disclosure.

FIG. 2 is a schematic diagram of a four-transmitter and two-receiver link according to one embodiment of the present disclosure.

FIG. 3 is another schematic diagram of the four-transmitter and two-receiver link according to one embodiment of the present disclosure.

FIG. 4 is a block diagram of an audio transmission system with four transmitters and two receivers according to one embodiment of the present disclosure.

FIG. 5 is a block diagram of a link synchronization method according to one embodiment of the present disclosure.

FIG. 6 is a schematic diagram of timing of a SyncACL link according to one embodiment of the present disclosure.

FIG. 7 is a schematic diagram of a process of link timing synchronization according to one embodiment of the present disclosure.

FIG. 8-1 is a schematic diagram of initial available channels according to one embodiment of the present disclosure.

FIG. 8-2 is a schematic diagram of an even channel sequence according to one embodiment of the present disclosure.

FIG. 8-3 is a schematic diagram of an odd channel sequence according to one embodiment of the present disclosure.

FIG. 9 is a schematic diagram of a data packet according to one embodiment of the present disclosure.

FIG. 10 is a schematic diagram of a process of switching between odd channel sequence and even channel sequence according to one embodiment of the present disclosure.

FIG. 11 is a second schematic diagram of initially available channels according to one embodiment of the present disclosure.

FIG. 12-1 is a schematic diagram of channels after being cyclically translated to the left according to one embodiment of the present disclosure.

FIG. 12-2 is another schematic diagram of the channels after being cyclically translated to the left according to one embodiment of the present disclosure.

FIG. 12-3 is another schematic diagram of the channels after being cyclically translated to the left according to one embodiment of the present disclosure.

FIG. 12-4 is another schematic diagram of the channels after being cyclically translated to the left according to one embodiment of the present disclosure.

FIG. 13 is a schematic diagram of a mic CE counter according to one embodiment of the present disclosure.

FIG. 14 is a schematic diagram of a link synchronization device according to one embodiment of the present disclosure.

FIG. 15 is a schematic diagram of the structure of an electronic device according to one embodiment of the present disclosure.

## DETAILED DESCRIPTION

Technical solutions in the embodiments of the present disclosure will be clearly and completely described below in conjunction with the accompanying drawings in the embodiments of the present disclosure. Obviously, the described embodiments are only a part of the embodiments of the present disclosure, rather than all of the embodiments. Based on the embodiments of the present disclosure, all other embodiments acquired by those of ordinary skill in the art without creative work shall fall within the protection scope of the present disclosure. In addition, it should be understood that the specific embodiments described herein are only used to illustrate and explain the present disclosure, and are not used to limit the present disclosure. In the present disclosure, unless otherwise stated, directional words, such as "upper" and "lower", generally refer to upper and lower parts of a device in actual use or working state, which are specifically refer to the drawing direction in the accompanying drawings. Directional words such as "in" and "out" refer to the outline of the device.

In addition, terms such as "first" and "second" are only used for the purpose of description, rather than being understood to indicate or imply relative importance or hint the number of indicated technical features. Thus, the feature limited by "first" and "second" can explicitly or implicitly include one or more features. In the description of the present disclosure, the meaning of "a plurality of" is two or more unless otherwise specified.

As shown in FIG. 2, a wireless microphone (wireless mic) with two transmitters and one receiver (which is configured to receive audio sent by microphones, and includes interfaces such as USB and Line-In). A Low Energy Audio (LE Audio) master device at the receiver of the wireless mic establishes CIS links with two mic slave devices to form a CIG link. To ensure audio quality of the two mic slave devices, the LE Audio master device needs to reserve a certain amount of bandwidth for each of audio channels to meet a maximum of 5 data packet retransmissions during each of CIS connection events. Each master device is connected to a maximum of two mic slave devices.

In order to acquire sufficient bandwidth when receiving audio data from four mics (four slave devices), a wireless mic with four transmitters and two receivers needs to integrate two master devices at two receiving ends thereof to connect to the four mic slave devices respectively. The air data packet timing of the CIS link between the two master devices is shown in FIG. 1. The LE over-the-air timing is solely dependent on a BLUETOOTH clock of the two master devices. Because there is no synchronization mechanism between the two master devices, transmission and reception processes of the first master device may overlap with transmission and reception processes of the second master device. Furthermore, because the two master devices are integrated into the two receivers and are relatively close to each other, transmit channels for data transmission may radiate power to adjacent channels, leading to radio frequency (RF) interference when transmitting and receiving data.

Therefore, in order to solve the above problems, the present disclosure synchronizes the CIS audio data receiving and transmitting timing of the two master devices and selects communication channels of the two master devices, so that the transmission and reception processes of the two master devices are non-overlapping, RF interference is minimized to the maximum extent, and stable transmission of four channels of audio data is achieved.

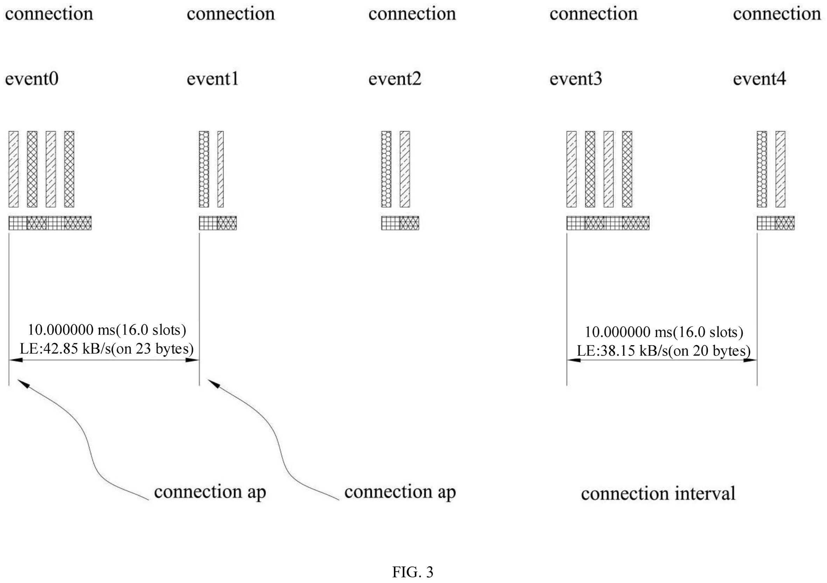

It's important to note that in the present disclosure, as shown in FIG. 3, after BLUETOOTH Low Energy (BLE) master devices enters a connection state, a link layer thereof should only transmit data packets on physical channels during connection events (hereafter CEs). During CEs, the master devices and the slave devices alternately send and receive the data packets. The master devices control the timing of CEs, and CE timing for the master devices and the slave devices occurs synchronously. Both the master devices and the slave devices should include a 16-bit CR counter, which includes a CE count value (CE(counter)) for each of the connected links. Each CE(counter) is configured to synchronize link layer control. The CE count value is set to zero at a first CE and incremented for each new CE until it reaches 0xFFFF. A starting point of each CE is called the connection event anchor point (hereafter CEap), and the time between each two CEs is called a connection event interval (CE interval). Each CE interval has a precision of 1µs in BLUETOOTH clock (BTCLK) units.

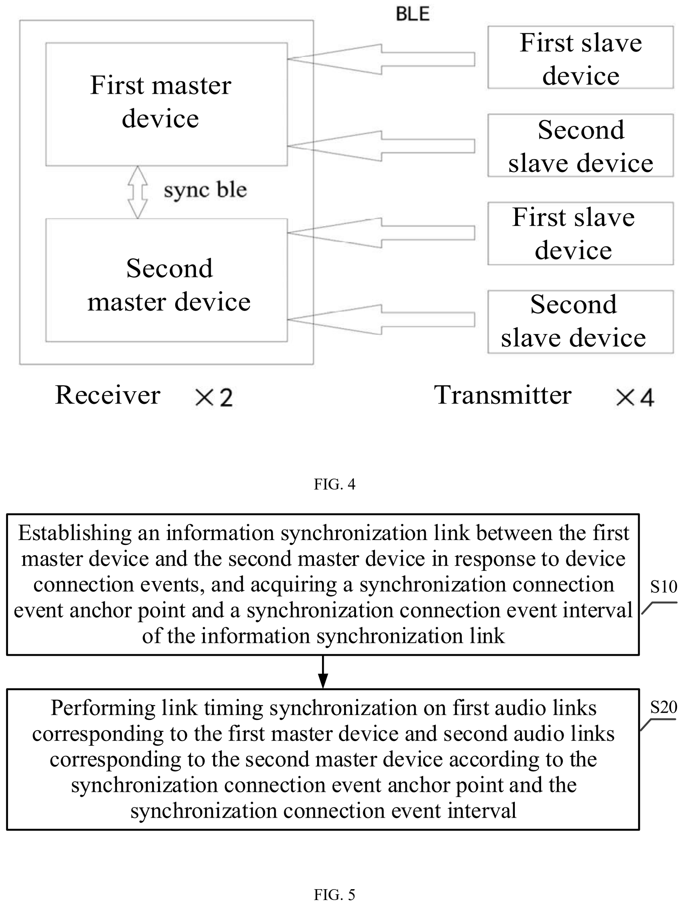

On this basis, a communication structure of the present disclosure is shown in FIG.4. After the LE Audio enters the connection state, CEs are initiated by the master devices and the CE anchor points of the master devices are specified by the master devices during an establishment process. Therefore, the BTCLKs of the two master devices (including a first master device and a second master device) are synchronized before each of the master devices establishes a connection with corresponding slave devices. Then, when the slave devices of each of the master devices (including a first slave device and a second slave device corresponding to a corresponding master device, and each of the slave devices in the embodiment is a mic) establish a BLE connection, the CE anchor points are set to have the same BTCLK, so as to achieve synchronization of BLUETOOTH data transmission and reception timing. Moreover, after the BLUETOOTH data transmission and reception timing is synchronized, in order to prevent the two master devices from using the same frequency channels to communicate within the same timing and causing RF interference, the two master devices are controlled to use different available channels within the same timing.

Specifically, the link synchronization method of the present disclosure is applied to an audio transmission system. The audio transmission system is as shown in FIG. 4. The audio transmission system includes the first master device, the second master device, first target slave devices matching the first master device, and second target slave devices matching the second master device.

In the embodiment, the present takes an example that each of the master devices is connected to two target slave devices (mics) for further illustration. The first target slave devices matching the first master device (also defined as a master 1) may include a mic1 and a mic2, and the second target slave devices matching the second master device (also defined as a master 2) may include a mic3 and a mic4.

As shown in FIG. 5, the link synchronization method of the present disclosure includes steps S10-S20.

The step S10 includes establishing an information synchronization link between the first master device and the second master device in response to device connection events, and acquiring a synchronization connection event anchor point and a synchronization connection event interval of the information synchronization link.

It should be noted that in the embodiment, the two master devices (including the master 1 and the master 2) on a receiving hardware use the same clock source, which prevents relative clock offset between the two master devices due to crystal oscillator errors, thereby maintaining BLUETOOTH clock synchronization between the two master devices.

On the premise, an information synchronization link (hereinafter referred to as a SyncACL link) is established between the master 1 and the master 2 by a special broadcast message for information synchronization. Then the synchronization connection event anchor point (SyncACL(ap)) and the synchronization connection event interval (SyncACL(connect interval)) of the information synchronization link are acquired. The synchronization connection event anchor point is directly determined when the information synchronization link is established.

It should be noted that in the embodiment, since the information synchronization link is configured to synchronize the BLUETOOTH clock and channels, the synchronization connection event interval of the information synchronization link is set to be significantly greater than the audio connection event interval of each of the audio links to reduce the impact on bandwidths of the audio links.

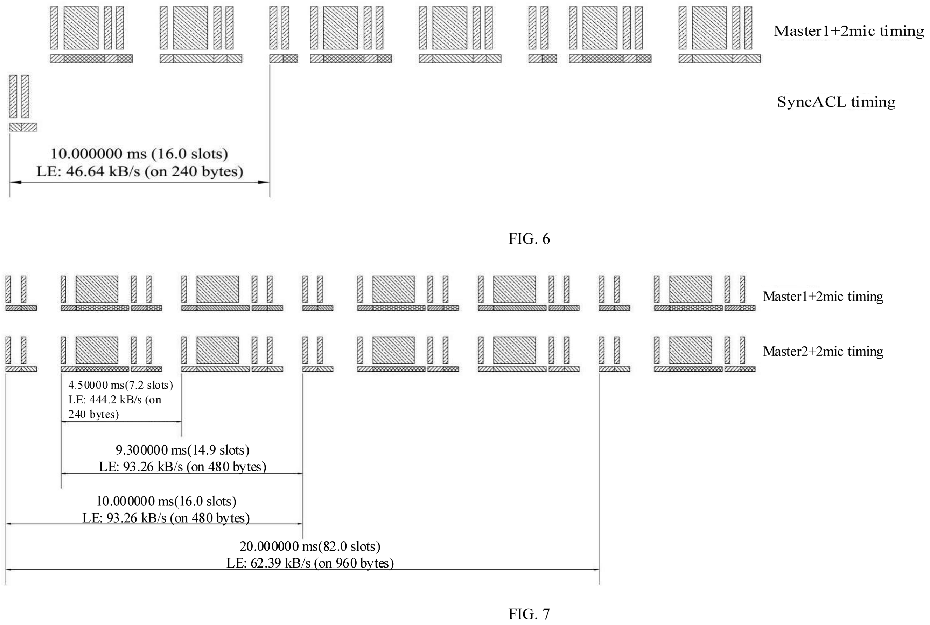

Specifically, for example, SyncACL(connect interval) = MIC(connect interval) * n. Where SyncACL(connect interval) is the synchronization connection event interval of the information synchronization link, and MIC(connect interval) is the audio connection event interval of each of the audio links (including first audio links corresponding to the first master device or second audio links corresponding to the second master device). For example, as shown in FIG.6, when n is 5, when the audio connection event interval of the audio links is 20ms, then the synchronization connection event interval of the information synchronization link is 100ms.

The step S20 includes performing link timing synchronization on first audio links corresponding to the first master device and second audio links corresponding to the second master device according to the synchronization connection event anchor point and the synchronization connection event interval.

The first audio links are the audio links between the first master device and the first target slave devices, and the second audio links are the audio links between the second master device and the second target slave devices.

In the embodiment, after the first master device establishes the information synchronization link with the second master device and after acquiring the synchronization connection event anchor point and the synchronization connection event interval of the information synchronization link, the first audio links corresponding to the first master device and the second audio links corresponding to the second master device are synchronized based on the synchronization connection event anchor point and synchronization connection event interval.

As shown in FIG. 7, the first audio links established by the master 1, the mic1, and the mic2 and the second audio links established by the master 2, the mic3, and the mic4 are fully synchronized on the BLUETOOTH over-the-air timing.

Compared with an audio transmission method through four transmitters and two receivers in the prior art, in the present disclosure, the information synchronization link between the first master device and the second master device is established first. The information synchronization link is configured to synchronize timing of the two master devices. Then, the synchronization connection event anchor point and the synchronization connection event interval of the information synchronization link are acquired. Link timing synchronization is performed on the first audio links corresponding to the first master device and the second audio links corresponding to the second master device according to the synchronization connection event anchor point and the synchronization connection event interval. A timing synchronization mechanism between the two master devices avoids overlapping of audio data transmission and reception processes of the two master devices, eliminates interference between adjacent channels during the audio data transmission and reception process, and thus ensures accuracy of audio data transmission.

In one embodiment, the step 20 of performing link timing synchronization on the first audio links corresponding to the first master device and the second audio links corresponding to the second master device according to the synchronization connection event anchor point and the synchronization connection event interval includes steps S201-S203.

The step S201 includes acquiring an audio connection event interval corresponding to the synchronization connection event interval, and calculating an anchor point offset according to the audio connection event interval.

The step S202 includes calculating audio connection event anchor points of the first audio links corresponding to the first master device and audio connection event anchor points of the second audio links corresponding to the second master device according to the anchor point offset.

The step S203 includes performing link timing synchronization on the first audio links and the second audio links according to the audio connection event anchor points.

In the embodiment, after the first master device and the second master device establish the information synchronization link and acquire the synchronization connection event anchor point and the synchronization connection event interval, the first master device and the second master device acquire the audio connection event interval corresponding to the synchronization connection event interval and then calculate the anchor point offset based on the audio connection event interval.

Specifically, for example, when the one of the synchronization connection event interval of the information synchronization link is 100ms, based on the above description, the corresponding audio connection event interval is 20ms, which ensures that the audio links are able to communicate with the microphones once within 20ms, and the anchor point offset can be set to 10ms.

Furthermore, based on the above-mentioned anchor point offset, the audio connection event anchor points of the first audio links corresponding to the first master device and the audio connection event anchor points of the second audio links corresponding to the second master device are calculated. Furthermore, based on the audio connection event anchor points acquired by calculation, the link timing synchronization is performed on the first audio links and the second audio links.

The step S202 of calculating the audio connection event anchor points of the first audio links corresponding to the first master device and the audio connection event anchor points of the second audio links corresponding to the second master device according to the anchor point offset includes steps S2021-2022.

The step S2021 includes determining the synchronization connection event anchor point as a first audio connection event anchor point of an audio link between the first master device and the first slave device corresponding to the first master device, and offsetting the first audio connection event anchor point by the anchor point offset to acquire a second audio connection event anchor point of an audio link between the first master device and the second slave device corresponding to the first master device.

The step S2022 includes determining the synchronous connection event anchor point as a third audio connection event anchor point of an audio link between the second master device and the first slave device corresponding to the second master device, and offsetting the third audio connection event anchor point by the anchor point offset to acquire a fourth audio connection event anchor point of an audio link between the second master device and the second slave device corresponding to the second master device.

In the embodiment, the first target slave devices that match the first master device include the mic1 and the mic2, and the second target slave devices that match the second master device include the mic3 and the mic4.

On the premise, the audio connection event anchor point of the first audio link of the mic1 is consistent with the synchronization connection event anchor point of the information synchronization link. The audio connection event anchor point of the first audio link of the mic2 is calculated by adding the anchor point offset of 10ms to the audio connection event anchor point of the first audio link of the mic1.

Therefore, the audio connection event anchor points for establishing the first audio links between the first master device and the two microphones (mic1 and mic2) are:

$$\text{mic1(ap)} = \text{SyncACL(ap)};$$

and

$$\text{mic2(ap)} = \text{SyncACL(ap)} + 10\text{ms}$$

SyncACL(ap) is the synchronization connection event anchor point of the information synchronization link, mic1(ap) is the audio connection event anchor point of the first audio link of the mic1, and mic2(ap) is the audio connection event anchor point of the first audio link of the mic2.

Similarly, the audio connection event anchor points for establishing the second audio links between the first master device and the two microphones (mic3 and mic4) are:

$$\text{mic3(ap)} = \text{SyncACL(ap)};$$

and

$$\text{mic4(ap)} = \text{SyncACL(ap)} + 10\text{ms}$$

SyncACL(ap) is the single synchronization connection event anchor point of the information synchronization link, mic3(ap) is the audio connection event anchor point of the second audio link of the mic3, and mic4(ap) is the audio connection event anchor point of the second audio link of the mic4.

Therefore, in the embodiment, after establishing the information synchronization link between the two master devices, the audio connection event anchor points corresponding to the first audio links and the second audio links are calculated based on the synchronization connection event anchor point of the information synchronization link. Through the audio connection event anchor points, the link timing synchronization of the first audio links and the second audio links is achieved, avoiding the overlap of the audio data transmission and reception processes of the two master devices and eliminating the RF interference between adjacent channels during the audio data transmission and reception process.

In some embodiments, after the step of performing link timing synchronization on the first audio links corresponding to the first master device and the second audio links corresponding to the second master device according to the synchronization connection event anchor point and the synchronization connection event interval, the link synchronization method further includes steps S30-S40.

The step S30 includes synchronously sharing initial available channels that are predetermined between the first master device and the second master device.

The step S40 includes acquiring target available channels of the first audio links and target available channels of the second audio links according to a channel sequence index of the initial available channel and the information synchronization link.

It should be noted that in the embodiment, after the first master device and the second master device establish the SyncACL link, the first master device may periodically (for example, every 2 seconds) scan background channels. In the embodiment, the background channels are wireless channels configured for communication between the master devices and the slave devices. Based on this, a channel index sequence containing at least 10 available channels (channels without strong interference, i.e., the initial available channels in the embodiment) is calculated from the background channels by using an anti-interference algorithm.

On the premise, the initial available channels are synchronously shared between the first master device and the second master device through the information synchronization link, so that the first master device and the second master device are allowed to acquire the same channel index sequence of the initial available channels through the information synchronization link.

Based on the channel sequence indexes of the initial available channels and the information synchronization link, the target available channels of the first audio links and the target available channels of the second audio links are acquired.

Notably, to fully utilize all available channels while ensuring no channel conflicts at the same time, in the embodiment, the target available channels of the first audio links are different from the target available channels of the second audio links.

Notably, in the embodiment, when the first master device updates the available channels, the first master device uses a LL_CHANNEL_STATUS_IND command (which describes a channel status in BLUETOOTH communication, such as whether a channel is available or unavailable) to index an updated available channel sequence to the second master device via the information synchronization link. In this way, the two master devices are allowed to share the available channel sequence in real time.

In the step S40 of acquiring the target available channels of the first audio links and the target available channels of the second audio links according to the channel sequence index of the initial available channels and the information synchronization link includes steps S401-S403.

The step S401 includes dividing the initial available channels into channel sequences having different parities according to the channel sequence index of the initial available channels.

The step S402 includes acquiring a connection event count corresponding to the information synchronization link.

The step S403 includes acquiring the target available channels of the first audio links and the target available channels of the second audio links according to a minimum bit count value of the connection event count and the parity sequence switching points corresponding to the channel sequences having different parities.

It should be noted that, in the embodiment, in order to avoid the two master devices using the same RF channels at the same timing, which causes RF interference between the two master devices during the data transmission and reception processes, the first master device and the second master device are not allowed to directly use the initial available channels. Therefore, in order to make full use of all initial available channels and ensure that the initial available channels do not conflict at the same time, the embodiment achieves dynamic switching of channel sequences based on a BLE frequency hopping algorithm, and the present disclosure divides the initial available channels into two sub-sequences (which are respectively an even sequence and an odd sequence) according to the channel sequence index of the initial available channels. The audio links corresponding to the two master devices dynamically switch the odd and even sequences during the data transmission process, so that all initial available channels are fully utilized and the target available channels are different from each other at the same time.

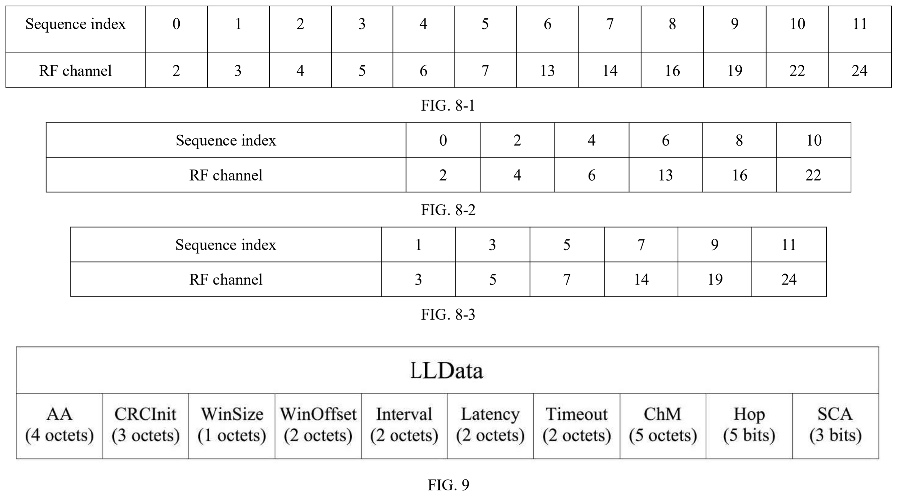

Specifically, for example, when the initial available channels are shown in FIG. 8-1, then the even channel sequence and the odd channel sequence are respectively shown in FIG. 8-2 and FIG. 8-3.

Therefore, when the audio links are established, each of the master devices sends a CONNECT_IND packet to the corresponding mics according to the BLE Security Manager Protocol Control (BLE SPC, one of the protocols responsible for handling BLE security management).

Each CONNECT_IND packet includes available channel information. A format of link layer data LLDatad in each CONNECT_IND packet is shown in FIG.9. Connection Hop Master (Chm) represents a connection hopping master device in BLUETOOTH communication and is configured to specify a frequency hopping mode of the connection. Chm contains 40 bits of data, of which lower 37 bits represent the available channel status (information about the available channel sequence). Upper 3 bits thereof are unused. The highest bit may configure to define an initial channel sequence selection bit, where 0 indicates that after a corresponding audio line is established, the even channel sequence is used; and 1 indicates that after a corresponding audio line is established, the odd channel sequence is used.

In the embodiment, when the first master device is connected to the first audio links (also defined as first mic links), a value of the highest bit thereof is a value of the lowest bit of the connection event count value of the information synchronization link. When the second master device is connected to the second audio links (also defined as second mic links), a value of the highest bit thereof is opposite to the value of the lowest bit of the connection event count value of the information synchronization link. Since the synchronization connection event interval of the information synchronization link is 5 times the audio connection event interval of each of the mic links, after the mic links are established, the frequency is switched alternately with a period of 5*CE(interval), which ensures that an odd/even sequence switching point is aligned with the synchronization connection event anchor point of the information synchronization link. Moreover, when the lowest bit of the connection event count value is 0, the first master device corresponds to the even channel sequence, and the second master device corresponds to the odd channel sequence. Alternatively, when the lowest bit of the connection event count value is 1, the first master device corresponds to the odd sequence, and the second master device corresponds to the even sequence.

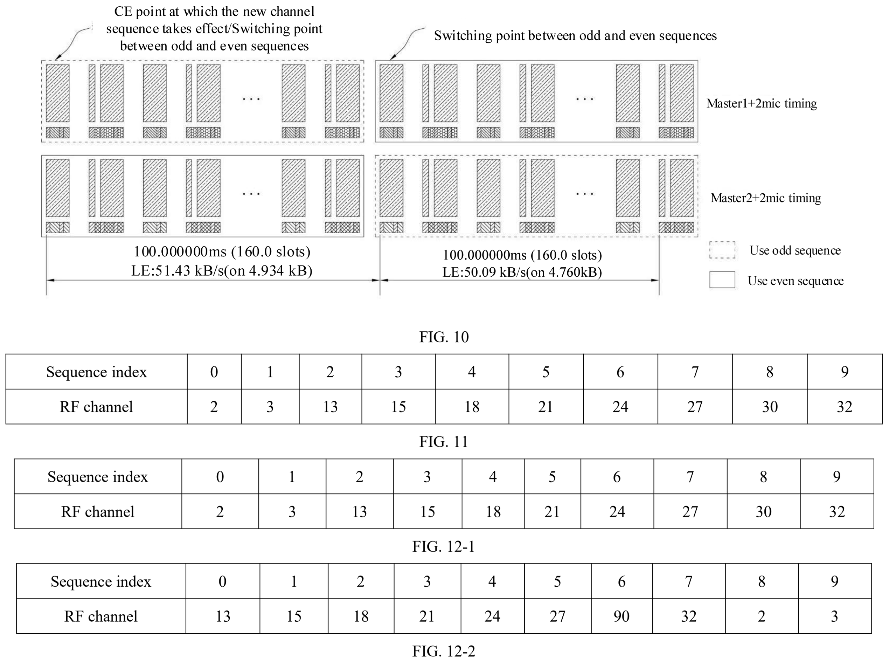

Each of the master devices may send a configured data packet described above to the corresponding mics through the LL_CHANNEL_STATUS_IND command. As shown in FIG. 10, a corresponding mic is able to calculate the even channel sequence and the odd channel sequence (i.e., the target available channels in the embodiment) based on the initial channel sequence selection bit in the configured data packet. The corresponding mic then alternates between the even channel sequence and the odd channel sequence within a range of the connection event count value, based on the switching point of the even channel sequence and the odd channel sequence.

Notably, in the embodiment, when the master devices update the initial available channel sequence based on an anti-interference algorithm, the two master devices in the information synchronization link simultaneously use the updated available channel sequence within the specified connection event count value. Similarly, within the range of the connection event count value, the two master devices send the channel sequence index of the updated available channel sequence to the mic through the LL_CHANNEL_STATUS_IND command. The mics then recalculate the corresponding even channel sequence or the odd channel sequence. The even channel sequence and the odd channel sequence are alternately switched within the range of the connection event count value, based on the corresponding switching points of the even channel sequence and the odd channel sequence.

In another embodiment, the step S40 of acquiring the target available channels of the first audio links and the target available channels of the second audio links according to the channel sequence index of the initial available channels and the information synchronization link includes steps S404-S406.

The step S404 includes starting a radio frequency counter according to a first synchronization connection event anchor point of the information synchronization link.

The step S405 includes translating the initial available channels sequence a plurality of times according to count values of the radio frequency counter and a quantity of the initial available channels.

The step S406 includes calculating, according to the quantity of the initial available channels and the count values of the radio frequency counter, the target available channels in translated initial available channel sequences corresponding to the first audio links and the target available channels in translated initial available channel sequences corresponding to the second audio links.

It should be noted that in the embodiment, in addition to selecting the target available channels through an odd-even channel division method, the target available channels are further determined from the initial available channels through a self-incrementing channel selection algorithm. when the quantity of the initial available channels is n (n $\geq$ 10), the channel sequence index of the mic link CE is RF index (i.e., the channel sequence index of the target available channels in the embodiment), a channel corresponding to the RF index sequence in the available channel sequence is the channel currently used by a current CE, and the channel sequence index of the target available channels RF index = (CE(counter) % n), where CE(counter) is the CE count value of a corresponding mic link, and RF index is the channel sequence index used by the current CE of the corresponding mic link.

It should be noted that after the information synchronization link is established, the two master devices start a radio frequency counter (RF) at the first audio connection event anchor point. A period of the RF counter is consistent with the connection event interval of each of the mic links. However, because the RF counter is time-synchronized, i.e., the RF counter takes on the same value at the same moment, initial channels acquired by the mics at the same moment are different from each other.

Therefore, in the embodiment, to ensure that each of the mic links starts using the channel RFx_micy (where x is the corresponding master device and y is a corresponding mic index) after establishment, the initial available channel sequence q shared by the information synchronization link is cyclically left-shifted by RFx_micy to acquire a new channel sequence q'. The target available channel thereof is then selected based on the new channel sequence q, which ensures that the channels acquired by the mic links at the same moment do not conflict.

A specific calculation method for RFx_micy is as follows:

RF channel between the first master device and the mic1: RFa_mic1 = ((RF(counter) % n) + 0
RF channel between the first master device and the mic2: RFa_mic2 = ((RF(counter) % n) + 2
RF channel between the second master device and the mic3: RFb_mic3 = ((RF(counter) % n) + 5
RF channel between the second master device and the mic4: RFb_mic4 = ((RF(counter) % n) + 7.

Specifically, for example, when RF(counter) = 100, the initial available channels are shown in FIG. 11.

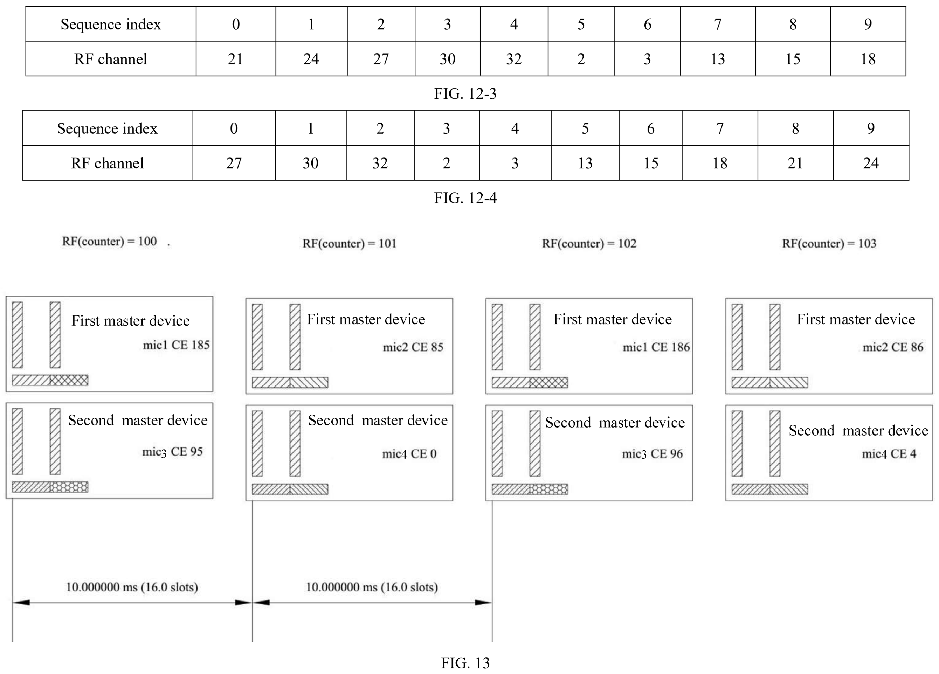

Substituting RF(counter) = 100 and the quantity of the initial available channels as 10 into the formula, the initial available channels are shifted left by 0, 2, 5, and 7 bits, respectively. The available channel sequence between the first master device and mic1 is shown in FIG. 12-1, the available channel sequence between the first master device and the mic2 is shown in FIG. 12-2, the available channel sequence between the second master device and the mic3 is shown in FIG.12-3, and the available channel sequence between the second master device and the mic4 is shown in FIG. 12-4.

Specifically, the step S406 of calculating, according to the quantity of the initial available channels and the count values of the radio frequency counter, the target available channels in the translated initial available channel sequences corresponding to the first audio links and the target available channels in the translated initial available channel sequences corresponding to the second audio links further includes steps S4061-S4065.

The step S4061 includes acquiring a first connection event count value of the first slave device in the first audio links, a second connection event count value of the second slave device in the first audio links, a third connection event count value of the first slave device in the second audio links, and the fourth connection event count value of the second slave device in the second audio links that are corresponding to count values of the radio frequency counter.

The step S4062 includes calculating, according to the first connection event count value and the quantity of the initial available channels, the target available channels in the translated initial available channel sequence corresponding to the first slave device in the first audio links.

The step S4063 includes calculating, according to the second connection event count value and the quantity of the initial available channels, the target available channels in the translated initial available channel sequence corresponding to the second slave device in the first audio links.

The step S4064 includes calculating, according to the third connection event count value and the quantity of the initial available channels, the target available channels in the translated initial available channel sequence corresponding to the first slave device in the second audio links.

The step S4065 includes calculating, according to the fourth connection event count value and the quantity of the initial available channels, the target available channels in the translated initial available channel sequence corresponding to the second slave device in the second audio links.

In the embodiment, the channel sequence index RF index of the target available channels is (CE(counter) % n).

As shown in FIG. 13, when establishing the mic links, the synchronization event anchor point of the information synchronization link is aligned with each of the audio connection event anchor points, and the difference in CE(counter) between each of the mics is an integer multiple of 5.

On the premise, a terminal device is able to calculate the first connection event count value of the mic1, the second connection event count value of the mic2, the third connection event count value of the mic3, and the fourth connection event count value of the mic4 corresponding to the count values of the RF counter, and substitute the four connection event count values into RF_index = (CE(counter) % n). Then, the channel sequence index of the target available channel of the mic1, the channel sequence index of the target available channel of the mic2, the channel sequence index of the target available channel of the mic3, and the channel sequence index of the target available channel of the mic4 are acquired by calculation.

Specifically, for example, as shown in FIG. 13, since the period of the RF counter RF(counter) is consistent with the CE(interval) of each of the mic links, when RF(counter) = 100, there is only a communication between the first master device and the mic1, and a communication between the second master device and the mic3. When RF(counter) = 101, there is only a communication between the first master device and the mic2, and a communication between the second master device and the mic4. In this case, as shown in FIG. 13, when RF(counter) = 100, the first connection event count value of the mic1 is 185, and the third connection event count value of the mic3 is 95, and when RF(counter) = 101, the second connection event count value of mic2 is 85, and the fourth connection event count value of the mic4 is 0, then the channel sequence index of the target available channel of the mic1, the channel sequence index of the target available channel of the mic2, the channel sequence index of the target available channel of the mic3, and the channel sequence index of the target available channel of the mic4 are calculated to be 5. Correspondingly, the available channel corresponding to the channel sequence index 5 of each of the mics is the target available channel. For example, when RF(counter) = 100, since there is only the communication between the first master device and the mic1 and the communication between the second master device and the mic3, as shown in FIGS. 12-1 and 12-3, the target available channels corresponding to the channel sequence indexes 5 of the mic1 and the mic3 are channels 21 and 2, respectively. Similarly, when RF(counter) = 101, since there is only the communication between the first master device and the mic2 and the communication between the second master device and the mic4, as shown in FIGS. 12-1 and 12-3, the target available channels corresponding to the channel sequence indexes 5 of the mic3 and the mic4 are channels 30 and 15, respectively.

Therefore, in the embodiment, the odd-even channel sequence switching or channel cyclic translation is configured to ensure that the target available channels of the slave devices at the same timing are different from each other when the two master devices are communicated with the slave devices, thereby avoiding RF interference on audio data transmission and reception caused by using the same channel for communication at the same timing.

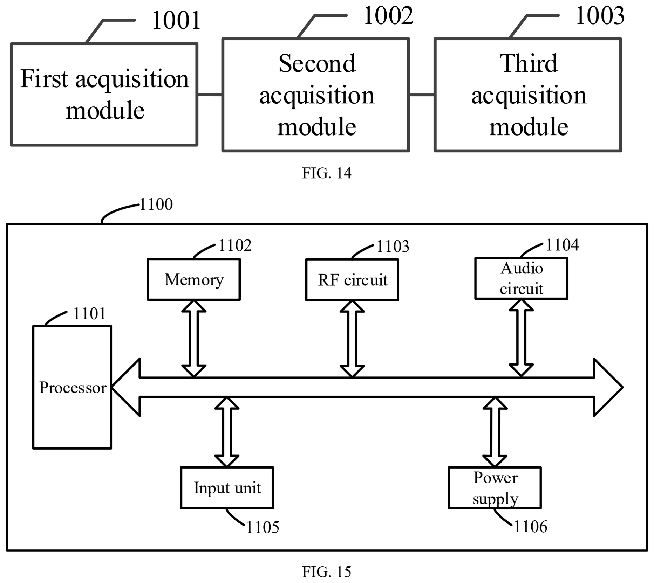

The embodiment further provides a link synchronization device integrated into a terminal device. For example, as shown in FIG. 14, the link synchronization device may include an establishment module 1001 and a synchronization module 1002. The establishment module 1001 is configured to establish an information synchronization link between a first master device and a second master device in response to device connection events, and acquire a synchronization connection event anchor point and a synchronization connection event interval of the information synchronization link. The synchronization module 1002 is configured to perform link timing synchronization on first audio links corresponding to the first master device and second audio links corresponding to the second master device according to the synchronization connection event anchor point and the synchronization connection event interval.

The first audio links are audio links between the first master device and first target slave devices, and the second audio links are audio links between the second master device and second target slave devices.

The first target slave devices include a first slave device and a second slave device thereof. The second target slave devices include a first slave device thereof and a second slave device thereof. The synchronization module 1002 includes a first calculation unit, a synchronization unit, and a second calculation unit.

The first calculation unit is configured to acquire an audio connection event interval corresponding to the synchronization connection event interval, and calculate an anchor point offset according to the audio connection event interval.

The second calculation unit is configured to calculate audio connection event anchor points of the first audio links corresponding to the first master device and audio connection event anchor points of the second audio links corresponding to the second master device according to the anchor point offset.

The synchronization unit is configured to perform link timing synchronization on the first audio links and the second audio links according to the audio connection event anchor points.

Optionally, both the first target slave devices and the second target slave devices include a first slave device and a second slave device. The second calculation unit includes a first determination subunit and a second determination subunit.

The first determination subunit is configured to determine the synchronization connection event anchor point as a first audio connection event anchor point of an audio link between the first master device and the first slave device corresponding to the first master device, and offset the first audio connection event anchor point by the anchor point offset to acquire a second audio connection event anchor point of an audio link between the first master device and the second slave device corresponding to the first master device.

The second determination subunit is configured to determine the synchronous connection event anchor point as a third audio connection event anchor point of an audio link between the second master device and the first slave device corresponding to the second master device, and offset the third audio connection event anchor point by the anchor point offset to acquire a fourth audio connection event anchor point of an audio link between the second master device and the second slave device corresponding to the second master device.

Optionally, the link synchronization device further includes a sharing module and an acquisition module.

The sharing module is configured to synchronously share initial available channels that are predetermined between the first master device and the second master device.

The acquisition module is configured to acquire target available channels of the first audio links and target available channels of the second audio links according to a channel sequence index of the initial available channels and the information synchronization link. The target available channels of the first audio links are different from the target available channels of the second audio links.

The acquisition module includes a division unit, a first acquisition unit and a second acquisition unit.

The division unit is configured to divide the initial available channels into channel sequences having different parities according to the channel sequence index of the initial available channels. The first acquisition unit is configured to acquire a connection event count corresponding to the information synchronization link.

The second acquisition unit is configured to acquire the target available channels of the first audio links and the target available channels of the second audio links according to a minimum bit count value of the connection event count and the switching points corresponding to the channel sequences having different parities.

The acquisition module further includes a starting unit, a translation unit, and a third acquisition unit. The starting unit is configured to start a radio frequency counter according to a first synchronization connection event anchor point of the information synchronization link. The translation unit is configured to translate the initial available channel sequence a plurality of times according to count values of the radio frequency counter and a quantity of the initial available channels. The third acquisition unit is configured to calculate, according to the quantity of the initial available channels and the count values of the radio frequency counter, the target available channels in translated initial available channel sequences corresponding to the first audio links and the target available channels in translated initial available channel sequences corresponding to the second audio links.

The third acquisition unit includes an acquisition subunit, a first calculation subunit, a second calculation subunit, a third calculation subunit, and a fourth calculation subunit.

The acquisition subunit is configured to acquire a first connection event count value of the first slave device in the first audio links, a second connection event count value of the second slave device in the first audio links, a third connection event count value of the first slave device in the second audio links, and the fourth connection event count value of the second slave device in the second audio links that are corresponding to count values of the radio frequency counter.

The first acquisition subunit is configured to calculate, according to the first connection event count value and the quantity of the initial available channels, the target available channels in the translated initial available channel sequence corresponding to the first slave device in the first audio links.

The second acquisition subunit is configured to calculate, according to the second connection event count value and the quantity of the initial available channels, the target available channels in the translated initial available channel sequence corresponding to the second slave device in the first audio links.

The third acquisition subunit is configured to calculate, according to the third connection event count value and the quantity of the initial available channels, the target available channels in the translated initial available channel sequence corresponding to the first slave device in the second audio links.

The fourth acquisition subunit is configured to calculate, according to the fourth connection event count value and the quantity of the initial available channels, the target available channels in the translated initial available channel sequence corresponding to the second slave device in the second audio links.

The specific implementation of the above operations may refer to the above embodiments and are not repeated herein.

The present disclosure further provides an electronic device. FIG. 15 is a schematic diagram of the structure of the electronic device according to one embodiment of the present disclosure. As shown in FIG. 15, the electronic device includes at least one processor 1101 (i.e. one or more processors 1101) and the memory 1102 of at least one computer-readable storage medium. The memory 1102 stores a computer program executable on the at least one processor 1101. The at least one processor 1101 is electrically connected to the memory 1102. Those skilled in the art can understand that a structure of the electronic device shown in the figures does not limit the electronic device, the electronic device may include more or fewer components than that shown in FIG. 15, the electronic device may combine certain components, or the electronic device may have different arrangements.

The at least one processor 1101 is a control center of the electronic device 1100. The at least one processor 1101 connects various parts of the electronic device 1100 via various interfaces and lines. By running or loading software programs and/or units stored in the memory 1102 and calling data stored in the memory 1102, the at least one processor 1101 executes various functions of the electronic device 1100 and processes data, thereby monitoring the electronic device 1100. The at least one processor 1101 may be a processor CPU and a network processor (NP), etc., and is configured to implement or execute various methods, steps, and logic blocks disclosed in the embodiments of the present disclosure.

In the embodiment of the present disclosure the at least one processor 1101 in the electronic device 1100 is configured to load the instructions corresponding to a processes of one or more application programs into the memory 1102 according to the following steps, and the at least one processor 1101 is configured to run the application programs stored in the memory 1102 to implement various functions.

The at least one processor 1101 is configured to establish an information synchronization link between a first master device and a second master device in response to device connection events, and acquire a synchronization connection event anchor point and a synchronization connection event interval of the information synchronization link. The at least one processor 1101 is further configured to perform link timing synchronization on first audio links corresponding to the first master device and second audio links corresponding to the second master device according to the synchronization connection event anchor point and the synchronization connection event interval.

The first audio links are audio links between the first master device and first target slave devices, and the second audio links are audio links between the second master device and second target slave devices.

The specific implementation of the above operations may refer to the above embodiments and is not repeated herein.

Optionally, as shown in FIG. 15, the electronic device 1100 further includes: a RF circuit 1103, an audio circuit 1104, an input unit 1105, and a power supply 1106. The at least one processor 1101 is electrically connected to the RF circuit 1103, the audio circuit 1104, the input unit 1105, and the power supply 1106. Those skilled in the art may understand that the structure of the electronic device shown in FIG. 15 does not limit the electronic device, and the electronic device may include more or fewer components than that shown in FIG. 15, or the components of the electronic device may combine certain components, or have different arrangements.

The RF circuit 1103 is configured to transmit and receive RF signals, and is configured to establish wireless communication with network devices or other electronic devices through wireless communication, and is configured to transmit and receive signals between the network devices and other electronic devices.

The audio circuit 1104 is configured to provide an audio interface between the user and the electronic device through a speaker and at least one microphone. The audio circuit 1104 is able to convert received audio data into electrical signals and transmit the electrical signals to the speaker, and the speaker converts the electrical signals into sound signals for output. The at least one microphone, on the other hand, converts collected sound signals into the electrical signals, and the electrical signals are received by the audio circuit 1104 and are converted into audio data. The audio data is then output to the at least one processor 1101 for processing, and then transmitted through the RF circuit 1103 to, for example, another electronic device. Alternatively, the audio data is output to the memory 1102 for further processing. The audio circuit 1104 may further include an earphone jack to allow communication between an external earphone and the electronic device.

The input unit 1105 is configured to receive input of number information, character information, or user characteristic information (e.g., fingerprint, iris, or facial information). The input unit 1105 may be a keyboard, a mouse, a joystick, an optical ball, or a trackball that is configured to generate input signals related to user settings and function control.

The power supply 1106 is configured to supply power to the various components of the electronic device 1100. Optionally, the power supply 1106 is logically connected to the at least one processor 1101 via a power management system, thereby enabling the power management system to manage charging, discharging, and power consumption. The power supply 1106 may include at least one of direct current (DC) or alternating current (AC) power supplies, a recharging system, a power fault detection circuit, a power converter or inverter, a power status indicator, and other arbitrary components.

Although not shown in FIG. 15, the electronic device 1100 may further include a sensor, a Wi-Fi module, a BLUETOOTH module, etc., which are not described in detail herein.

In the above embodiments, the descriptions of each of the embodiments have different focuses. For details not described in one embodiment, reference may be made to the relevant descriptions of other embodiments.

Those skilled in the art can understand that all or part of the steps in the various methods of the above embodiments may be accomplished via instructions or by controlling related hardware through instructions. The instructions can be stored in a computer-readable storage medium and loaded and executed by the at least one processor.

To this end, one embodiment of the present disclosure provides a computer-readable storage medium storing computer programs. The computer programs are loaded by the at least one processor to execute any one of the link synchronization methods of the embodiments of the present disclosure. The computer programs are loaded to execute the following steps of the link synchronization method.

Specifically, the computer programs are executed to establish an information synchronization link between the first master device and the second master device in response to device connection events, acquire a synchronization connection event anchor point and a synchronization connection event interval of the information synchronization link; and perform link timing synchronization on first audio links corresponding to the first master device and second audio links corresponding to the second master device according to the synchronization connection event anchor point and the synchronization connection event interval.

The first audio links are audio links between the first master device and the first target slave devices, and the second audio links are audio links between the second master device and the second target slave devices.

The specific implementation of the above operations may refer to the above embodiments and is not repeated herein.

The computer-readable storage medium may include a read-only memory (ROM), a random access memory (RAM), a magnetic disk, or an optical disk.

Because the computer programs stored in the computer-readable storage medium are able to execute any of embodiments of the link synchronization method of the present disclosure, the technical effects achieved by any of embodiments of the link synchronization method of the present disclosure are achieved. The technical effects may refer to the above embodiments for details and are not repeated herein.

In the link synchronization device, the computer-readable storage medium, and the electronic device, the descriptions of each of the embodiments have different focuses. For portions not described in detail in one embodiment, reference should be made to the relevant descriptions of other embodiments. Those skilled in the art can clearly understand that, for the sake of convenience and brevity, the detailed operation and technical effects of the link synchronization device, the computer-readable storage medium, a computer program product, the electronic device, and their corresponding units described above may be referred to in the description of the link synchronization method in the above embodiments and are not repeated herein.

The above is a detailed introduction to the link synchronization method, the link synchronization system, the electronic device, and the computer-readable storage medium provided in the embodiments of the present disclosure. Specific examples are used in the article to illustrate the principles and implementation methods of the present disclosure. The description of the above embodiments is only used to help understand the method of the present disclosure and its core ideas. Further, for those skilled in the art, based on the ideas of the present disclosure, there will be changes in the specific implementation methods and application scope. In summary, the content of the specification should not be understood as a limitation on the present disclosure.

**Claims**

1. A link synchronization method, applied to an audio transmission system, wherein the audio transmission system comprises a first master device, a second master device, first target slave devices matching the first master device, and second target slave devices matching the second master device; wherein the link synchronization method comprising steps:

   establishing an information synchronization link between the first master device and the second master device in response to device connection events, and acquiring a synchronization connection event anchor point and a synchronization connection event interval of the information synchronization link; and
   performing link timing synchronization on first audio links corresponding to the first master device and second audio links corresponding to the second master device according to the synchronization connection event anchor point and the synchronization connection event interval;
   wherein the first audio links are audio links between the first master device and the first target slave devices, and the second audio links are audio links between the second master device and the second target slave devices.

2. The link synchronization method according to claim 1, wherein the step of performing link timing synchronization on the first audio links corresponding to the first master device and the second audio links corresponding to the second master device according to the synchronization connection event anchor point and the synchronization connection event interval comprises steps:

   acquiring an audio connection event interval corresponding to the synchronization connection event interval, and calculating an anchor point offset according to the audio connection event interval;
   calculating audio connection event anchor points of the first audio links corresponding to the first master device and audio connection event anchor points of the second audio links corresponding to the second master device according to the anchor point offset; and

   performing link timing synchronization on the first audio links and the second audio links according to the audio connection event anchor points.

3. The link synchronization method according to claim 2, wherein both the first target slave devices and the second target slave device comprise a first slave device and a second slave device; wherein the step of calculating the audio connection event anchor points of the first audio links corresponding to the first master device and the audio connection event anchor points of the second audio links corresponding to the second master device according to the anchor point offset comprises steps:

   determining the synchronization connection event anchor point as a first audio connection event anchor point of an audio link between the first master device and the first slave device corresponding to the first master device, and offsetting the first audio connection event anchor point by the anchor point offset to acquire a second audio connection event anchor point of an audio link between the first master device and the second slave device corresponding to the first master device; and
   determining the synchronous connection event anchor point as a third audio connection event anchor point of an audio link between the second master device and the first slave device corresponding to the second master device, and offsetting the third audio connection event anchor point by the anchor point offset to acquire a fourth audio connection event anchor point of an audio link between the second master device and the second slave device corresponding to the second master device.

4. The link synchronization method according to claim 1, wherein after the step of performing link timing synchronization on the first audio links corresponding to the first master device and the second audio links corresponding to the second master device according to the synchronization connection event anchor point and the synchronization connection event interval, the link synchronization method further comprises steps:

   synchronously sharing initial available channels that are predetermined between the first master device and the second master device; and
   acquiring target available channels of the first audio links and target available channels of the second audio links according to a channel sequence index of the initial available channels and the information synchronization link;
   wherein the target available channels of the first audio links are different from the target available channels of the second audio links.

5. The link synchronization method according to claim 4, wherein the step of acquiring the target available channels of the first audio links and the target available channels of the second audio links according to the channel sequence index of the initial available channels and the information synchronization link comprises steps:

dividing the initial available channels into channel sequences having different parities according to the channel sequence index of the initial available channels;
acquiring a connection event count corresponding to the information synchronization link; and
acquiring the target available channels of the first audio links and the target available channels of the second audio links according to a minimum bit count value of the connection event count and switching points corresponding to the channel sequences having different parities.

6. The link synchronization method according to claim 4, wherein the step of acquiring the target available channels of the first audio links and the target available channels of the second audio links according to the channel sequence index of the initial available channels and the information synchronization link comprises steps:

starting a radio frequency counter according to a first synchronization connection event anchor point of the information synchronization link;
translating an initial available channel sequence a plurality of times according to count values of the radio frequency counter and a quantity of the initial available channels; and
calculating, according to the quantity of the initial available channels and the count values of the radio frequency counter, the target available channels in translated initial available channel sequences corresponding to the first audio links and the target available channels in translated initial available channel sequences corresponding to the second audio links.

7. The link synchronization method according to claim 6, wherein the step of calculating, according to the quantity of the initial available channels and the count values of the radio frequency counter, the target available channels in the translated initial available channel sequences corresponding to the first audio links and the target available channels in the translated initial available channel sequences corresponding to the second audio links

acquiring a first connection event count value of the first slave device in the first audio links, a second connection event count value of the second slave device in the first audio links, a third connection event count value of the first slave device in the second audio links, and the fourth connection event count value of the second slave device in the second audio links that are corresponding to count values of the radio frequency counter;
calculating, according to the first connection event count value and the quantity of the initial available channels, the target available channels in the translated initial available channel sequence corresponding to the first slave device in the first audio links;
calculating, according to the second connection event count value and the quantity of the initial available channels, the target available channels in the translated initial available channel sequence corresponding to the second slave device in the first audio links;
calculating, according to the third connection event count value and the quantity of the initial available channels, the target available channels in the translated initial available channel sequence corresponding to the first slave device in the second audio links; and
calculating, according to the fourth connection event count value and the quantity of the initial available channels, the target available channels in the translated initial available channel sequence corresponding to the second slave device in the second audio links.

8. A link synchronization device, comprising:

an establishment module, configured to establish an information synchronization link between a first master device and a second master device in response to device connection events, and configured to acquire a synchronization connection event anchor point and a synchronization connection event interval of the information synchronization link; and
a synchronization module, configured to perform link timing synchronization on first audio links corresponding to the first master device and second audio links corresponding to the second master device according to the synchronization connection event anchor point and the synchronization connection event interval;
wherein the first audio links are audio links between the first master device and first target slave devices, and the second audio links are audio links between the second master device and second target slave devices.

9. An electronic device, comprising:

     a processor; and
     a memory;
     wherein the memory stores a computer program, and when the computer program is executed by the processor, the processor executes the steps of the link synchronization method according to any one of claims 1-7.

10. A computer-readable storage medium, comprising:

     a computer program;
     wherein when the computer program is run on an electronic device, the computer program enables the electronic device to execute the steps of the link synchronization method according to any one of claims 1-7.

16

mic1 audio data packet

mic2 audio data packet

4.500000 ms(7.2 slots)  CIS CE

9.302000 ms(14.9 slots)
LE:46.66 kB/s(on 240 bytes)  CIG CE

FIG. 1

Master1+2mic timing

Master2+2mic timing

FIG. 2

connection event0    connection event1    connection event2    connection event3    connection event4

10.000000 ms(16.0 slots)
LE:42.85 kB/s(on 23 bytes)

10.000000 ms(16.0 slots)
LE:38.15 kB/s(on 20 bytes)

connection ap          connection ap          connection interval

FIG. 3

BLE

First master
device

sync ble

Second
master device

First slave
device

Second
slave device

First slave
device

Second
slave device

Receiver $\times 2$  Transmitter $\times 4$

FIG. 4

| Establishing an information synchronization link between the first master device and the second master device in response to device connection events, and acquiring a synchronization connection event anchor point and a synchronization connection event interval of the information synchronization link | S10 |

| Performing link timing synchronization on first audio links corresponding to the first master device and second audio links corresponding to the second master device according to the synchronization connection event anchor point and the synchronization connection event interval | S20 |

FIG. 5

Master1+2mic timing

SyncACL timing

10.000000 ms (16.0 slots)
LE: 46.64 kB/s (on 240 bytes)

FIG. 6

Master1+2mic timing

Master2+2mic timing

4.50000 ms(7.2 slots)
LE: 444.2 kB/s (on 240 bytes)

9.300000 ms(14.9 slots)
LE: 93.26 kB/s (on 480 bytes)

10.000000 ms(16.0 slots)
LE: 93.26 kB/s (on 480 bytes)

20.000000 ms(82.0 slots)
LE: 62.39 kB/s (on 960 bytes)

FIG. 7

| Sequence index | 0 | 1 | 2 | 3 | 4 | 5 | 6 | 7 | 8 | 9 | 10 | 11 |
|---|---|---|---|---|---|---|---|---|---|---|---|---|
| RF channel | 2 | 3 | 4 | 5 | 6 | 7 | 13 | 14 | 16 | 19 | 22 | 24 |

FIG. 8-1

| Sequence index | | 0 | 2 | 4 | 6 | 8 | 10 |
|---|---|---|---|---|---|---|---|
| RF channel | | 2 | 4 | 6 | 13 | 16 | 22 |

FIG. 8-2

| Sequence index | | 1 | 3 | 5 | 7 | 9 | 11 |
|---|---|---|---|---|---|---|---|
| RF channel | | 3 | 5 | 7 | 14 | 19 | 24 |

FIG. 8-3

| LLData | | | | | | | | | |
|---|---|---|---|---|---|---|---|---|---|
| AA (4 octets) | CRCInit (3 octets) | WinSize (1 octets) | WinOffset (2 octets) | Interval (2 octets) | Latency (2 octets) | Timeout (2 octets) | ChM (5 octets) | Hop (5 bits) | SCA (3 bits) |

FIG. 9

Master1+2mic timing

Master2+2mic timing

Use odd sequence

Use even sequence

Switching point between odd and even sequences

100.000000ms (160.0 slots)
LE:50.09 kB/s(on 4.760kB)

CE point at which the new channel sequence takes effect/Switching point between odd and even sequences

100.000000ms (160.0 slots)
LE:51.43 kB/s(on 4.934 kB)

**FIG. 10**

| Sequence index | 0 | 1 | 2 | 3 | 4 | 5 | 6 | 7 | 8 | 9 |
|---|---|---|---|---|---|---|---|---|---|---|
| RF channel | 2 | 3 | 13 | 15 | 18 | 21 | 24 | 27 | 30 | 32 |

**FIG. 11**

| Sequence index | 0 | 1 | 2 | 3 | 4 | 5 | 6 | 7 | 8 | 9 |
|---|---|---|---|---|---|---|---|---|---|---|
| RF channel | 2 | 3 | 13 | 15 | 18 | 21 | 24 | 27 | 30 | 32 |

**FIG. 12-1**

| Sequence index | 0 | 1 | 2 | 3 | 4 | 5 | 6 | 7 | 8 | 9 |
|---|---|---|---|---|---|---|---|---|---|---|
| RF channel | 13 | 15 | 18 | 21 | 24 | 27 | 32 | 90 | 2 | 3 |

**FIG. 12-2**

| Sequence index | 0 | 1 | 2 | 3 | 4 | 5 | 6 | 7 | 8 | 9 |
|---|---|---|---|---|---|---|---|---|---|---|
| RF channel | 21 | 24 | 27 | 30 | 32 | 2 | 3 | 13 | 15 | 18 |

FIG. 12-3

| Sequence index | 0 | 1 | 2 | 3 | 4 | 5 | 6 | 7 | 8 | 9 |
|---|---|---|---|---|---|---|---|---|---|---|
| RF channel | 27 | 30 | 32 | 2 | 3 | 13 | 15 | 18 | 21 | 24 |

FIG. 12-4

RF(counter) = 100 .     RF(counter) = 101     RF(counter) = 102     RF(counter) = 103

First master device
mic1 CE 185

First master device
mic2 CE 85

First master device
mic1 CE 186

First master device
mic2 CE 86

Second master device
mic3 CE 95

Second master device
mic4 CE 0

Second master device
mic3 CE 96

Second master device
mic4 CE 4

10.000000 ms (16.0 slots)     10.000000 ms (16.0 slots)

FIG. 13

1001

First acquisition module

1002

Second acquisition module

1003

Third acquisition module

FIG. 14

1100

1102

Memory

1103

RF circuit

1104

Audio circuit

1101

Processor

Input unit

1105

Power supply

1106

FIG. 15

## INTERNATIONAL SEARCH REPORT

| International application No. |
|---|
| **PCT/CN2024/113137** |

| | |
|---|---|
| **A. CLASSIFICATION OF SUBJECT MATTER** | |
| H04L67/1095(2022.01)i | |
| According to International Patent Classification (IPC) or to both national classification and IPC | |

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, DWPI, IEEE: 低功耗, 蓝牙, 同步, 主, 接收, 设备, 装置, 事件, 间隔, 锚点, 第二, 多个, 信道, 通道, 链路, 路径, Bluetooth, Low Energy, isochronous, Master, Slave, interval, event, anchor point, Sychronization, BLE, 5.2

**C. DOCUMENTS CONSIDERED TO BE RELEVANT**

| Category* | Citation of document, with indication, where appropriate, of the relevant passages | Relevant to claim No. |
|---|---|---|
| A | US 11075968 B1 (HARMAN INTERNATIONAL INDUSTRIES, INC.) 27 July 2021 (2021-07-27)<br>description, column 4, line 38 to column 31, line 21, and figures 11-22 | 1-10 |
| A | WO 2022222648 A1 (GUANGDONG OPPO MOBILE TELECOMMUNICATIONS CORP., LTD.) 27 October 2022 (2022-10-27)<br>entire document | 1-10 |
| A | CN 116996857 A (SHENZHEN BLUETRUM TECHNOLOGY CO., LTD.) 03 November 2023 (2023-11-03)<br>entire document | 1-10 |
| A | CN 117412272 A (ACTIONS TECHNOLOGY CO., LTD.) 16 January 2024 (2024-01-16)<br>entire document | 1-10 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **12 November 2024** | **18 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113137**

| Patent document cited in search report | | | Publication date (day/month/year) | Patent family member(s) | | | Publication date (day/month/year) |
|---|---|---|---|---|---|---|---|
| US | 11075968 | B1 | 27 July 2021 | None | | | |
| WO | 2022222648 | A1 | 27 October 2022 | CN | 115226080 | A | 21 October 2022 |
| CN | 116996857 | A | 03 November 2023 | None | | | |
| CN | 117412272 | A | 16 January 2024 | None | | | |

Form PCT/ISA/210 (patent family annex) (July 2022)